# EUROPEAN PATENT APPLICATION

(11) **EP 3 319 161 A1**
(43) Date of publication of application: **09.05.2018**
(21) Application number: 16818089.1
(22) Date of filing: 04.07.2016
(51) Int. Cl.: H01M 10/052, H01M 4/134, H01M 10/0567, H01M 10/0568, H01M 10/0569, H01M 6/16

(54) **NON-AQUEOUS ELECTROLYTE BATTERY AND METHOD FOR MANUFACTURING SAME**

(30) Priority: 02.07.2015 JP 2015133630; 08.02.2016 JP 2016021451; 30.03.2016 JP 2016069181
(71) Applicant: Maxell Holdings, Ltd., Kyoto 618-8525 (JP)
(72) Inventor: HATAKEYAMA, Atsushi, Ibaraki-shi Osaka 567-8567 (JP); MORIKAMI, Hidetoshi, Ibaraki-shi Osaka 567-8567 (JP); MASAOKA, Yasunori, Ibaraki-shi Osaka 567-8567 (JP); KAMINE, Hirokazu, Ibaraki-shi Osaka 567-8567 (JP); MATSUMOTO, Hiroaki, Ibaraki-shi Osaka 567-8567 (JP); KISHIMI, Mitsuhiro, Ibaraki-shi Osaka 567-8567 (JP)
(74) Representative: Diehl & Partner GbR
(86) International application number: PCT/JP2016/069757
(87) International publication number: WO 2017/002981

(57) **Abstract**

Provided are a non-aqueous electrolyte battery that exhibits favorable load characteristics at low temperatures after being stored at a high temperature, and a method for manufacturing the non-aqueous electrolyte battery. A non-aqueous electrolyte battery of the present invention includes a negative electrode, a positive electrode, and a non-aqueous electrolyte. The negative electrode contains at least one negative electrode active material selected from the group consisting of Li (lithium), a Li alloy, an element capable of forming an alloy with Li, and a compound containing the element, and the non-aqueous electrolyte contains, in an amount within a range of 8 mass% or less, a phosphoric acid compound having, in its molecule, a group represented by General Formula (1): 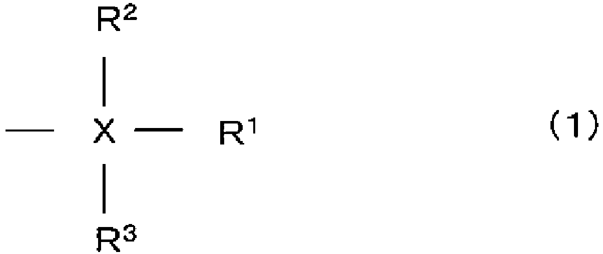 where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms are optionally substituted by a fluorine atom.

## Description

### Technical Field

The present invention relates to a non-aqueous electrolyte battery exhibiting favorable load characteristics at a low temperature after being stored at a high temperature, and a method for manufacturing the non-aqueous electrolyte battery.

### Background Art

Non-aqueous electrolyte batteries are used in various applications, taking advantage of their characteristics such as high-capacity characteristics and high-voltage characteristics. Improvements in various characteristics thereof have been in demand as a result of an increase in the number of fields to which the non-aqueous electrolyte batteries are applied.

In particular, the practical application of electric cars and the like has resulted in an increase in demand for vehicle-mounted non-aqueous electrolyte batteries in recent years. While vehicle-mounted non-aqueous electrolyte batteries are mainly applied to driving power sources for motors in electric cars, they are being increasingly applied to other devices. For example, emergency call systems for making a report about an accident or the like of a vehicle to various related parties are currently under development, and the application of the non-aqueous electrolyte batteries to power sources for these systems is being looked into.

In practice, such systems operate in limited cases, but should reliably operate in the event of an emergency. Therefore, the batteries used as power sources are required to have a reliability according to which their characteristics can be favorably maintained despite being stored for a long period of time.

Considering that there have been some cases where a blowout of a tire of a traveling vehicle leads to a serious accident, vehicles equipped with tire pressure monitoring systems (TPMSs) to ensure safety during the travel of the vehicles have become widespread. Non-aqueous electrolyte batteries (primary batteries) are used as power sources for the above-mentioned systems. These systems are installed on the inside of tires that may become hot and humid, and therefore, the batteries used as the power sources are also required to have a reliability according to which their characteristics can be maintained for a long period of time.

Improvement of a non-aqueous electrolytic solution is being looked into as one of the techniques for improving the characteristics of such non-aqueous electrolyte batteries. It is proposed that a phosphoric acid ester compound or the like having a specific structure is added to the non-aqueous electrolytic solution in order to provide the electrolytic solution with flame retardancy to improve the safety of the batteries or in order to improve the durability and voltage resistance of the batteries (Patent Documents 1 and 2).

Incidentally, a lithium metal or a lithium alloy such as a Li-Al (lithium-aluminum) alloy is used as a negative electrode active material for a non-aqueous electrolyte primary battery. A lithium alloy can also be used as a negative electrode active material for a non-aqueous electrolyte secondary battery, and therefore, it is proposed that a clad material including a metal that is capable of occluding and releasing lithium and a different type of metal that is not capable of occluding and releasing lithium is used to form a negative electrode, thereby stabilizing the battery characteristics (Patent Document 3).

Vehicle-mounted batteries may be left in a high-temperature environment in vehicles in summer, for example, and are thus required to have excellent storage characteristics in a high-temperature environment. In order to improve the storage characteristics of batteries under such a circumstance, Patent Document 4 proposes that a non-aqueous electrolyte to which a dinitrile compound has been added to give a concentration within a range of 10 mass% or less is used in a lithium primary battery. Moreover, Patent Documents 5 and 6 propose a technique that uses, in a lithium secondary battery, a non-aqueous electrolyte to which lithium borofluoride, a compound having a nitrile group in its molecule, or the like has been added.

### Citation List

### Patent Documents

Patent Document 1: JP 2001-319685A
Patent Document 2: JP 2015-72864A
Patent Document 3: JP H8-293302A
Patent Document 4: Japanese Patent No. 5168317
Patent Document 5: JP 2015-111551A
Patent Document 6: JP 2015-111552A

### Disclosure of Invention

### Problem to be Solved by the Invention

In general, when the systems as mentioned above are mounted in vehicles, there is high possibility that batteries are exposed to a high-temperature environment, and therefore, the batteries are required to have excellent heat resistance. Meanwhile, the vehicles may also be used in cold climate areas, and therefore, batteries that are less likely to deteriorate in their characteristics even after being exposed to a high-temperature environment and that can exhibit favorable load characteristics in a low-temperature environment are required.

There is also demand for ensuring the storage characteristics of the vehicle-mounted batteries, according to which sufficient output characteristics can be maintained despite being stored for a long period of time in a high-temperature environment, and according to which electricity can be favorably discharged despite the batteries being exposed to a low-temperature environment after the long-term storage in a high-temperature environment.

The present invention was achieved in light of the aforementioned circumstances, and it is an object thereof to provide a non-aqueous electrolyte battery that exhibits favorable load characteristics at a low temperature after being stored at a high temperature, and a method for manufacturing the non-aqueous electrolyte battery.

It is another object of the present invention to provide a non-aqueous electrolyte battery that can be repeatedly charged and has favorable storage characteristics.

### Means for Solving Problem

A first aspect of a non-aqueous electrolyte battery of the present invention with which the above-mentioned object can be achieved includes a negative electrode, a positive electrode, and a non-aqueous electrolyte, wherein the negative electrode contains at least one negative electrode active material selected from the group consisting of Li (lithium), a Li alloy, an element capable of forming an alloy with Li, and a compound containing the element, and the non-aqueous electrolyte contains, in an amount within a range of 8 mass% or less, a phosphoric acid compound having, in its molecule, a group represented by General Formula (1) below.

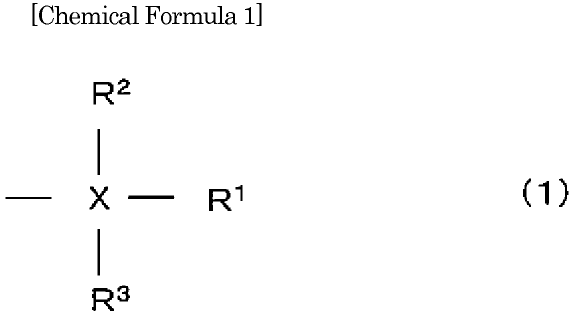

In General Formula (1) above, X is Si, Ge or Sn, R¹, R² and R³ independently represent an alkyl group having 1 to 10 carbon atoms, an alkenyl group having 2 to 10 carbon atoms, or an aryl group having 6 to 10 carbon atoms, and some or all of hydrogen atoms are optionally substituted by a fluorine atom.

The non-aqueous electrolyte battery according to the first aspect can be manufactured using a manufacturing method of the present invention that uses a non-aqueous electrolyte containing, in an amount within a range of 8 mass%, a phosphoric acid compound having, in its molecule, a group represented by General Formula (1) above.

A second aspect of a non-aqueous electrolyte battery of the present invention includes a negative electrode, a positive electrode, and a non-aqueous electrolyte, wherein the negative electrode includes a laminate including a metal substrate layer that does not form an alloy with Li, and an Al active layer joined to at least one side of the metal substrate layer, a Li-Al alloy is formed on at least a surface side of the Al active layer, and the non-aqueous electrolyte contains LiBF₄ as a lithium salt, propylene carbonate as an organic solvent, and a nitrile compound.

### Effects of the Invention

With the first aspect of the present invention, it is possible to provide a non-aqueous electrolyte battery that exhibits favorable load characteristics at a low temperature after being stored at a high temperature, and a method for manufacturing the non-aqueous electrolyte battery.

With the second aspect of the present invention, it is possible to provide a non-aqueous electrolyte battery that can be repeatedly charged and has favorable storage characteristics.

### Brief Description of Drawings

[FIG. 1] FIG. 1 is a schematic cross-sectional view illustrating an example of a negative electrode precursor to be used in a non-aqueous electrolyte battery of the present invention.
[FIG. 2] FIG. 2 is a schematic plan view illustrating an example of a non-aqueous electrolyte battery of the present invention.
[FIG. 3] FIG. 3 is a cross-sectional view of the non-aqueous electrolyte battery shown in FIG. 2 taken along line I-I.

### Description of the Invention

Hereinafter, first, regarding the details of a non-aqueous electrolyte and a negative electrode according to a non-aqueous electrolyte battery of the present invention, the first aspect and the second aspect will be separately described in detail.

### Non-aqueous electrolyte according to the first aspect

It is known that when added to a non-aqueous electrolyte of a non-aqueous electrolyte battery in which a carbon material is used as a negative electrode active material, a phosphoric acid compound having a group represented by General Formula (1) above in its molecule improves the safety.

However, investigation conducted by the inventors of the present invention revealed that when the non-aqueous electrolyte to which the phosphoric acid compound had been added was used in a non-aqueous electrolyte battery in which at least one negative electrode active material selected from the group consisting of Li (Li metal), a Li alloy, an element capable of forming an alloy with Li, and a compound containing that element was used, the load characteristics of the non-aqueous electrolyte battery stored at a high temperature could be maintained at a high level in a low-temperature environment.

In addition, it was revealed that when the non-aqueous electrolyte to which the phosphoric acid compound had been added was used in a secondary battery in which the above-mentioned negative electrode active material was used, initial charging and discharging efficiency could be improved.

It is known that the above-mentioned phosphoric acid compound forms a SEI (solid electrolyte interface) coating on the surface of the positive electrode in the non-aqueous electrolyte battery in which a carbon material is used as a negative electrode active material. On the other hand, it is thought that the above-mentioned phosphoric acid compound also acts on the negative electrode in the non-aqueous electrolyte battery in which the negative electrode active material as mentioned above is used. However, unlike compounds such as vinylene carbonate that are known to form a coating on the surface of the negative electrode, it is thought that the above-mentioned phosphoric acid compound forms a thin and high-quality coating on the surface of the above-mentioned negative electrode active material. Therefore, it is inferred that the deterioration of the negative electrode during storage at a high temperature is suppressed, and the deterioration of the load characteristics due to the formation of the coating on the surface can also be suppressed, thus making it possible to form a battery that exhibits excellent load characteristics in a low-temperature environment even after being stored at a high temperature.

Moreover, the thinner the surface coating is, the smaller the amount of Li required for the coating formation becomes, and therefore, it is inferred that the irreversible capacity of the negative electrode will decrease in a secondary battery (non-aqueous electrolyte secondary battery) including the above-mentioned negative electrode active material, resulting in the improvement of charging and discharging efficiency.

In the first aspect of the non-aqueous electrolyte battery of the present invention, a solution (non-aqueous electrolytic solution) prepared by dissolving a lithium salt in a non-aqueous solvent, which will be described below, can be used as the non-aqueous electrolyte. Then, a phosphoric acid compound having the group represented by General Formula (1) above in its molecule is added to the non-aqueous electrolyte before use.

The above-mentioned phosphoric acid compound has a structure in which at least one of hydrogen atoms in phosphoric acid is substituted by the group represented by General Formula (1) above.

In General Formula (1) above, X is Si, Ge or Sn, and Si is preferable. In other words, it is preferable that the above-mentioned phosphoric acid compound is silyl phosphate. In General Formula (1) above, R¹, R² and R³ are independently an alkyl group having 1 to 10 carbon atoms, an alkenyl group having 2 to 10 carbon atoms, or an aryl group having 6 to 10 carbon atoms, and, in particular, a methyl group or an ethyl group is preferable. Some or all of hydrogen atoms in R¹, R² and R³ are optionally substituted by a fluorine atom. It is more preferable that the group represented by General Formula (1) above is a trimethylsilyl group.

The above-mentioned phosphoric acid compound may be phosphoric acid in which only one hydrogen atom is substituted by the group represented by General Formula (1) above, two hydrogen atoms are substituted by the group represented by General Formula (1) above, or all of the three hydrogen atoms are substituted by the group represented by General Formula (1) above. It is preferable that all of the three hydrogen atoms of phosphoric acid are substituted by the group represented by General Formula (1) above.

Examples of the phosphoric acid compound include mono(trimethylsilyl) phosphate, di(trimethylsilyl) phosphate, tris(trimethylsilyl) phosphate, dimethyltrimethylsilyl phosphate, methyl bis(trimethylsilyl) phosphate, diethyltrimethylsilyl phosphate, diphenyl(trimethylsilyl) phosphate, tris(triethylsilyl) phosphate, and tris(vinyldimethylsilyl) phosphate. Mono(trimethylsilyl) phosphate, di(trimethylsilyl) phosphate, tris(trimethylsilyl) phosphate, dimethyltrimethylsilyl phosphate, and methyl bis(trimethylsilyl) phosphate are preferable, and tris(trimethylsilyl) phosphate is particularly preferable.

The content of the phosphoric acid compound having the group represented by General Formula (1) above in its molecule in the non-aqueous electrolyte to be used in a battery is preferably 0.1 mass% or more, more preferably 0.3 mass% or more, even more preferably 0.5 mass% or more, and even more preferably 0.7 mass% or more, from the viewpoint of more favorably ensuring the above-mentioned effects of using the phosphoric acid compound. Moreover, if the content is excessively large, there is a risk that the thickness of a SEI coating that may be formed at an electrode interface will increase, whereby the resistance will increase, leading to the deterioration of load characteristics. Therefore, the content of the phosphoric acid compound having the group represented by General Formula (1) above in its molecule in the non-aqueous electrolyte to be used in a battery is preferably 8 mass% or less, more preferably 7 mass% or less, even more preferably 5 mass% or less, and even more preferably 3 mass% or less.

As the non-aqueous solvent, aprotic organic solvents such as ethylene carbonate (EC), propylene carbonate (PC), butylene carbonate (BC), dimethyl carbonate (DMC), diethyl carbonate (DEC), methylethyl carbonate (MEC), compounds having a lactone ring, 1,2-dimethoxyethane (DME), tetrahydrofuran (THF), dimethyl sulfoxide (DMSO), 1,3-dioxolane, formamide, dimethylformamide (DMF), nitromethane, methyl formate, methyl acetate, ethyl acetate, phosphoric acid triester (e.g., trimethyl phosphate and triethyl phosphate), trimethoxymethane, sulfolane, 3-methyl-2-oxazolidinone, and diethylether, and derivatives thereof (e.g., 2-methyltetrahydrofuran) can be used alone, or a mixed solvent obtained by mixing two or more of the aprotic organic solvents can be used. In particular, in order to obtain the above-mentioned effects of the phosphoric acid compound more easily, the content of propylene carbonate is preferably set to 10 vol% or more, and more preferably 20 vol% or more, in the total of solvents.

Lithium salts according to the non-aqueous electrolyte include LiClO₄, LiPF₆, LiBF₄, LiAsF₆, LiSbF₆, LiCF₃SO₃, LiCF₃CO₂, Li₂C₂F₄(SO₃)₂, LiN(FSO)₂, LiN(CF₃SO₂)₂, Lic(CF₃SO₂)₃, LiCₙF₂ₙ₊₁SO₃ (n≥2), LiN(RfOSO₂)₂ (where Rf is a fluoroalkyl group), and at least one selected from these lithium salts is used. The concentration of lithium salt in the non-aqueous electrolyte is preferably 0.6 to 1.8 mol/l, and more preferably 0.9 to 1.6 mol/l. Two or more lithium salts can be used together, and in this case, it is sufficient that the total concentration of these lithium salts is adjusted to be within the above-mentioned range.

It is preferable that the non-aqueous electrolyte contains a compound having a lactone ring because the discharge characteristics of a battery can be improved at a low temperature. Examples of the compound having a lactone ring include γ-butyrolactone (γ-BL) and lactones having a substituent at the α position.

The lactones having a substituent at the α position are preferably five-membered rings (the rings include four carbon atoms), for example. The above-mentioned lactones may have one or two substituents at the α position.

Examples of the above-mentioned substituent include hydrocarbon groups and halogen groups (i.e., fluoro group, chloro group, bromo group, and iodo group). The hydrocarbon group is preferably an alkyl group, aryl group, or the like, and the number of carbon atoms thereof is preferably 1 or more and 15 or less (preferably 6 or less). Some or all of hydrogen atoms of the hydrocarbon group are optionally substituted by a fluorine atom. The hydrocarbon group as the above-mentioned substituent is more preferably a methyl group, an ethyl group, a propyl group, a butyl group, a phenyl group, or the like.

Specific examples of the lactones having a substituent at the α position include α-methyl-γ-butyrolactone, α-ethyl-γ-butyrolactone, α-propyl-γ-butyrolactone, α-butyl-γ-butyrolactone, α-phenyl-γ-butyrolactone, α-fluoro-γ-butyrolactone, α-chloro-γ-butyrolactone, α-bromo-γ-butyrolactone, α-iodo-γ-butyrolactone, α,α-dimethyl-γ-butyrolactone, α,α-diethyl-γ-butyrolactone, α,α-diphenyl-γ-butyrolactone, α-ethyl-α-methyl-γ-butyrolactone, α-methyl-α-phenyl-γ-butyrolactone, α,α-difluoro-γ-butyrolactone, α,α-dichloro-γ-butyrolactone, α,α-dibromo-γ-butyrolactone, and α,α-diiodo-γ-butyrolactone. These lactones may be used alone or in combination of two or more. Out of these lactones, α-methyl-γ-butyrolactone is preferable.

When the compound having a lactone ring is used, the content of the compound having a lactone ring in the total of organic solvent used in the non-aqueous electrolyte is preferably 0.1 mass% or more, more preferably 0.5 mass% or more, and even more preferably 1 mass% or more, from the viewpoint of favorably ensuring the effects of using the compound having a lactone ring. On the other hand, the content thereof is preferably 30 mass% or less, more preferably 10 mass% or less, and even more preferably 5 mass% or less, in order not to inhibit the functions of the phosphoric acid compound having the group represented by General Formula (1) above in its molecule.

It is preferable that the non-aqueous electrolyte contains a nitrile compound. In a battery, the nitrile compound in the non-aqueous electrolyte forms a coating mainly on the surface of the positive electrode to suppress the elution of a transition metal (e.g., Co or Mn) from a positive electrode active material. Therefore, when the nitrile compound is used together with the phosphoric acid compound having the group represented by General Formula (1) above in its molecule, the high-temperature storage characteristics and the like of a battery can be further improved.

Specific examples of the nitrile compound include mononitriles such as acetonitrile, propionitrile, butyronitrile, valeronitrile, benzonitrile, and acrylonitrile; dinitriles such as malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile; cyclic nitriles such as benzonitrile; and alkoxy-substituted nitriles such as methoxyacetonitrile. These nitrile compounds may be used alone or in combination of two or more. Out of these nitrile compounds, adiponitrile is preferable.

The content of the nitrile compound in the non-aqueous electrolyte to be used in a battery is preferably 1 mass% or more, and more preferably 2 mass% or more, from the viewpoint of more favorably ensuring the above-mentioned effects. However, the nitrile compound is highly reactive with the negative electrode (lithium), and therefore, it is preferable that the usage amount of the nitrile compound is reduced to some extent, and excessive reaction between the nitrile compound and the negative electrode is thus suppressed. Therefore, the content of the nitrile compound in the non-aqueous electrolyte to be used in a battery is preferably 8 mass% or less, and more preferably 5 mass% or less.

Additives including vinylene carbonates; cyclic sultone compounds such as 1,3-propanesultone and 1,3-propenesultone; disulfide compounds such as diphenyl disulfide, benzene compounds such as cyclohexylbenzene, biphenyl, fluorobenzene, and t-butylbenzene; fluorine-substituted cyclic carbonates such as 4-fluoro-1,3-dioxolan-2-one (FEC); and organic lithium borates such as lithium tetrakis(acetate) borate and lithium bis(oxalate) borate (LiBOB) can also be added to the non-aqueous electrolyte as appropriate for the purpose of further improving various characteristics of a battery. In particular, it is thought that when a cyclic sultone compound or organic lithium borate is used together with the phosphoric acid compound having the group represented by General Formula (1) above in its molecule, a more favorable surface coating is formed on the positive electrode or the negative electrode, thus making it possible to further improve the high-temperature storage characteristics and the like of a battery.

Furthermore, a gel (gel-like electrolyte) obtained by adding a gelling agent such as a known polymer to the above-mentioned solution (non-aqueous electrolytic solution) may also be used as the non-aqueous electrolyte.

### Non-aqueous electrolyte according to the second aspect

In the second aspect of the non-aqueous electrolyte battery of the present invention, a non-aqueous electrolyte (non-aqueous electrolytic solution) containing LiBF₄ as the lithium salt, PC as the organic solvent, and a nitrile compound is used. When such a non-aqueous electrolyte is used, the swelling of the battery during storage at a high temperature can be suppressed. Furthermore, the discharge characteristics are maintained during storage at a high temperature due to use of the above-mentioned negative electrode, and in addition, electricity can be discharged in a low-temperature environment (e.g., -10°C or lower) after such storage at a high temperature.

PC used as the organic solvent particularly contributes to the maintenance of the discharge characteristics of the non-aqueous electrolyte battery at a low temperature. For example, EC is used as the organic solvent for the non-aqueous electrolyte according to the non-aqueous electrolyte battery in many cases. However, the freezing point of PC is lower than that of EC, and therefore, PC can be used to improve the output characteristics of a battery even in an environment at a lower temperature.

As the organic solvent according to the non-aqueous electrolyte, only PC may be used or another organic solvent may be used together with PC. Examples of another organic solvent that can be used together with PC include the various solvents (organic solvents) excluding PC listed above as the examples of the solvents for the non-aqueous electrolyte according to the first aspect. It is desirable that a combination, such as a mixed solvent of PC and the linear carbonate (e.g., dimethyl carbonate, diethyl carbonate, or methylethyl carbonate) listed above as the examples, with which high conductivity can be obtained is used to form a battery having more favorable characteristics.

It is preferable to use PC and a compound having a lactone ring as the organic solvent from the viewpoint of further improving the discharge characteristics of the non-aqueous electrolyte battery at a low temperature.

Examples of the compound having a lactone ring include the various compounds listed above as the examples of compounds having a lactone ring that can be used in the non-aqueous electrolyte according to the first aspect. γ-Butyrolactone and α-methyl-γ-butyrolactone are more preferable.

The content of PC in the total of organic solvent used in the non-aqueous electrolyte according to the second aspect is preferably 10 vol% or more, and more preferably 30 vol% or more, from the viewpoint of favorably ensuring the effects of using PC. It should be noted that only PC may be used as the organic solvent in the non-aqueous electrolyte as described above, and therefore, the maximum value of the favorable content of PC in the total organic solvent used in the non-aqueous electrolyte is 100 vol%.

When the compound having a lactone ring is used in the non-aqueous electrolyte according to the second aspect, the content of the compound having a lactone ring in the organic solvent used in the non-aqueous electrolyte is preferably 0.1 mass% or more, more preferably 0.5 mass% or more, and even more preferably 1 mass% or more, from the viewpoint of favorably ensuring the effects of using the compound having a lactone ring. It is desirable that the compound having a lactone ring is used to the extent that the content of the compound having a lactone ring satisfies these favorable values while the content of PC in the total of organic solvent satisfies the above-mentioned favorable values. Therefore, the content of the compound having a lactone ring in the organic solvent used in the non-aqueous electrolyte is preferably less than 90 vol%, more preferably less than 70 vol%, and even more preferably less than 50 vol%.

In the non-aqueous electrolyte according to the second aspect, LiBF₄ is used as the lithium salt because LiBF₄ has a high heat resistance, can improve the storage characteristics of the non-aqueous electrolyte battery in a high-temperature environment, and has a function of suppressing the corrosion of aluminum used in a battery.

As the lithium salt according to the non-aqueous electrolyte, only LiBF₄ may be used, or another lithium salt may be used together with LiBF₄. Examples of another lithium salt that can be used together with LiBF₄ include the various lithium salts (excluding LiBF₄) listed above as the examples of the lithium salts for the non-aqueous electrolyte according to the first aspect.

The concentration of LiBF₄ in the non-aqueous electrolyte is preferably 0.6 mol/l or more, and more preferably 0.9 mol/l or more.

It should be noted that the total concentration of the lithium salts in the non-aqueous electrolyte according to the second aspect is preferably 1.8 mol/l or less, and more preferably 1.6 mol/l or less. Therefore, when only LiBF₄ is used as the lithium salt, it is preferable to use LiBF₄ to the extent that the concentration of LiBF₄ satisfies the above-mentioned favorable maximum value. On the other hand, when another lithium salt is used together with LiBF₄, it is preferable to use the lithium salts to the extent that the concentration of LiBF₄ satisfies the above-mentioned favorable minimum value while the total concentration of the lithium salts satisfies the above-mentioned favorable maximum value.

Moreover, a nitrile compound is added, as an additive, to the non-aqueous electrolyte according to the second aspect. When the non-aqueous electrolyte to which a nitrile compound has been added is used, the nitrile compound adsorbs to the surface of the active material in the positive electrode to form a coating, and this coating suppresses the generation of gas caused by the oxidative decomposition of the non-aqueous electrolyte, thus making it possible to suppress the swelling of a battery particularly during storage in a high-temperature environment.

Examples of the nitrile compound to be added to the non-aqueous electrolyte include the various nitrile compounds listed above as the examples of nitrile compounds that can be added to the non-aqueous electrolyte according to the first aspect. These nitrile compounds may be used alone or in combination of two or more. Out of these nitrile compounds, dinitriles are preferable, and adiponitrile is more preferable.

In the second aspect, the content of the nitrile compound in the non-aqueous electrolyte to be used in a battery is preferably 0.1 mass% or more, and more preferably 1 mass% or more, from the viewpoint of more favorably ensuring the above-mentioned effects of using the nitrile compound. However, when the amount of the nitrile compound in the non-aqueous electrolyte is excessive, the discharge characteristics of a battery tend to decrease at a low temperature. Therefore, the content of the nitrile compound in the non-aqueous electrolyte to be used in a battery is preferably 10 mass% or less, and more preferably 5 mass% or less from the viewpoint of reducing the amount of the nitrile compound in the non-aqueous electrolyte to some extent and further improving the discharge characteristics of a battery at a low temperature.

In the second aspect, additives such as vinylene carbonates, 1,3-propanesultone, diphenyl disulfide, cyclohexylbenzene, biphenyl, fluorobenzene, and t-butylbenzene can also be added to the non-aqueous electrolyte as appropriate for the purpose of further improving various characteristics of a battery.

Furthermore, the above-mentioned non-aqueous electrolyte (non-aqueous electrolytic solution) may also be made into a gel (gel-like electrolyte) by using a gelling agent such as a known polymer.

### Negative electrode according to the first aspect

The negative electrode according to the first aspect of the non-aqueous electrolyte battery contains at least one negative electrode active material selected from the group consisting of Li (Li metal), a Li alloy, an element capable of forming an alloy with Li, and a compound containing the element. For example, a negative electrode that is constituted by a foil made of the above-mentioned metal or alloy (compound) or has a structure in which such a foil is attached to one side or both sides of a current collector, or a negative electrode that has a structure in which a negative electrode mixture layer containing the above-mentioned negative electrode active material is formed on one side or both sides of a current collector can be used.

An example of the Li alloy is a Li-Al alloy. Examples of the element capable of forming an alloy with Li include Si and Sn. Furthermore, examples of the compound containing an element capable of forming an alloy with Li include a Si oxide and a Sn oxide.

When Li is used as the negative electrode active material, a Li foil may be used as it is, for example, or a Li layer with a surface on which a Li-Al alloy is formed by layering an Al foil on the surface of a Li foil can also be used as the negative electrode in order to cause the negative electrode to have smooth surfaces and exhibit improved load characteristics.

When a Li-Al alloy is used as the negative electrode active material, an Al foil (encompassing an Al alloy foil; the same applies hereinafter) with a surface on which a Li-Al alloy is formed can be used, for example. In addition, it is also possible to use a negative electrode that is obtained by preparing a laminate in which a Li layer (layer containing Li) for forming a Li-Al alloy is layered, through pressure bonding or the like, on the surface of an Al layer (layer containing Al) constituted by an Al foil or the like, and bringing this laminate into contact with the non-aqueous electrolyte in a battery to form a Li-Al alloy on the surface of the Al layer. In the case of such a negative electrode, a laminate in which the Li layer is formed on only one side of the Al layer may be used, or a laminate in which the Li layers are formed on both sides of the Al layer may be used. The laminate can be formed by pressure-bonding an Al foil and a Li metal foil (encompassing a Li alloy foil; the same applies hereinafter) to each other, for example.

Furthermore, the negative electrode can also be formed as follows. A negative electrode precursor including an Al layer constituted by an Al foil or the like is prepared, and a battery including this negative electrode precursor is charged to form a Li-Al alloy on the surface of the Al layer. In other words, it is also possible to form a negative electrode in which a Li-Al alloy is formed on at least the surface side of the Al layer according to the negative electrode precursor by causing at least Al on the surface side of the Al layer to react electrochemically with Li ions in the non-aqueous electrolytic solution through charging of the battery.

A current collector can also be used in the negative electrode. When an Al foil with a surface on which a Li-Al alloy has been formed in advance is used in the negative electrode, it is sufficient that a metal foil, a metal mesh, or the like serving as a current collector is pressure-bonded to a surface of the Al foil on which no Li-Al alloy has been formed.

A current collector can also be used in the case where the negative electrode is formed by forming a Li-Al alloy in a battery. When a laminate including a Li layer is used, a laminate in which an Al layer is formed on one side of a negative electrode current collector and a Li layer is formed on a side of the Al layer that is opposite to the negative electrode current collector may be used, or a laminate in which Al layers are formed on both sides of a negative electrode current collector and a Li layer is formed on a side of each Al layer that is opposite to the negative electrode current collector may be used, for example. When the negative electrode is formed by charging a battery including a negative electrode precursor to form a Li-Al alloy, a laminate in which an Al layer is formed on one side of a negative electrode current collector may be used as the negative electrode precursor, or a laminate in which Al layers are formed on both sides of a negative electrode current collector may be used as the negative electrode precursor, for example. It is sufficient that an Al layer (Al foil) is layered on a negative electrode current collector through pressure bonding. A clad material including a negative electrode current collector (metal foil) made of copper, nickel, or the like and an Al layer (Al foil) can also be used.

It should be noted that, in the case of the negative electrode including a current collector, the same negative electrode as a negative electrode according to the second aspect, which will be described later, can be used.

The thickness of the Al layer according to the above-mentioned laminate or negative electrode precursor for forming a negative electrode (it should be noted that when a current collector is used and Al layers are formed on both sides of the current collector, the thickness refers to the thickness of the Al layer on each side) is preferably 10 µm or more, more preferably 20 µm or more, and even more preferably 30 µm or more, while the thickness is preferably 150 µm or less, more preferably 70 µm or less, and even more preferably 50 µm or less.

The thickness of the Li layer according to the above-mentioned laminate for forming a negative electrode (it should be noted that when a current collector is used, and Al layers are formed on both sides of the current collector, and a Li layer is formed on the surface of each Al layer, or when Li layers are formed on both sides of an Al layer without using a current collector, the thickness refers to the thickness of the Li layer on each side) is preferably 20 µm or more, and more preferably 30 µm or more, while the thickness is preferably 80 µm or less, and more preferably 70 µm or less.

A negative electrode including a negative electrode mixture layer can be manufactured through steps of preparing a paste-like or slurry-like composition containing a negative electrode mixture obtained by dispersing a negative electrode active material, a binder, and optionally a conductive assistant in a solvent such as N-methyl-2-pyrrolidone (NMP) or water (it should be noted that the binder may be dissolved in the solvent), applying this composition to one side or both sides of a current collector, drying the composition, and then optionally performing press processing such as calendering processing.

Examples of the binder included in the negative electrode mixture layer include polyvinylidene fluoride (PVDF), polytetrafluoroethylene (PTFE), styrene-butadiene rubber (SBR), and carboxymethylcellulose (CMC). When the negative electrode mixture layer contains a conductive assistant, examples of the conductive assistant include carbon materials including graphite (graphite carbon material) such as natural graphite (e.g., flake graphite) and synthetic graphite; carbon black such as acetylene black, Ketjen black, channel black, furnace black, lampblack, and thermal black; and carbon fibers.

It is preferable that the composition of the negative electrode mixture layer includes the negative electrode active material in an amount of 80 to 99.8 mass% and the binder in an amount of 0.1 to 10 mass%, for example. When the negative electrode mixture layer further contains the conductive assistant, it is preferable that the negative electrode mixture layer contains the conductive assistant in an amount of 0.1 to 10 mass%. Moreover, the thickness of the negative electrode mixture layer (the thickness on each side of the current collector) is preferably 10 to 100 µm.

When the current collector is used in the negative electrode, examples of the material for the current collector include copper, nickel, iron, and stainless steel, and examples of its form include a plainly woven metal net, an expanded metal, a lath net, a punched metal, a metal foam, and a foil (plate). The thickness of the current collector is preferably 10 to 50 µm, and more preferably 40 µm or less, for example.

A lead body for electrical connection to another member in a battery can be attached to the negative electrode using an ordinary method.

### Negative electrode according to the second aspect

In the second aspect of the non-aqueous electrolyte battery of the present invention, a Li-Al alloy is used as the negative electrode active material such that high storage characteristics and a high capacity can be achieved and charging can be repeated a certain number of times even when the battery is used particularly in a high-temperature environment such as inside a vehicle.

In addition, in the second aspect of the present invention, a current collector is used for the purpose of stabilizing the shape of the negative electrode during discharge and enabling the next instance of charging.

Regarding a battery in which a Li-Al alloy is used as the negative electrode active material, a Li foil (encompassing a Li alloy foil unless otherwise stated; the same applies hereinafter) and an Al foil (encompassing an Al alloy foil unless otherwise stated; the same applies hereinafter) are attached to each other and introduced into a battery, and Li and Al are allowed to react in the presence of the non-aqueous electrolyte to form a Li-Al alloy. However, when an additional metal foil (e.g., Cu (copper) foil or a Cu alloy foil) serving as a current collector is merely placed on a laminate of the Li foil and the Al foil, and the resultant laminate is inserted into a battery, the internal resistance of the battery increases after storage (particularly after storage in a high-temperature environment), and the storage characteristics are insufficiently improved.

Investigation conducted by the inventors of the present invention revealed that this is because a volume change occurs when a Li-Al alloy is formed on the laminate of the Li foil and the Al foil in the battery, or fine powder made of the Li-Al alloy is formed to facilitate the absorption of the non-aqueous electrolyte into the negative electrode, leading to a volume change, and therefore, the adhesion between the Li-Al alloy layer (Al foil) and the current collector cannot be ensured.

As a result of further research, the inventors of the present invention found that a method in which an Al metal layer (e.g., Al foil) for forming a Li-Al alloy and a metal substrate layer (e.g., Cu foil) that acts as a current collector and does not form an alloy with Li are joined to each other in advance, and a Li layer (e.g. Li foil) is layered on the surface of the metal layer to cause the Li in the Li layer and the Al in the Al metal layer to react, or a method in which an assembly of the Al metal layer and the metal substrate layer is assembled in a battery as-is, and the battery assembled is charged to cause the Al in the Al metal layer and the Li ions in the non-aqueous electrolyte to react electrochemically is used to form a negative electrode in which a Li-Al alloy is formed on at least the surface side of the Al metal layer, and an Al active layer is joined to the surface of the metal substrate layer, thus making it possible to suppress an increase in internal resistance during storage.

The inventors of the present invention also found that when the negative electrode as mentioned above is provided, and in addition, the above-mentioned specific non-aqueous electrolyte containing the specific organic solvent, the specific lithium salt, and the specific additive is used, swelling can be suppressed in a high-temperature environment, and the discharge characteristics can be favorably maintained at a low temperature after storage in a high-temperature environment. Based on these findings, the non-aqueous electrolyte battery (battery of the second aspect) of the present invention that can be repeatedly charged and discharged, and has favorable storage characteristics was achieved.

A laminate in which a Li layer is formed using, as a first method, a method for attaching a Li foil to the surface of the Al layer of a laminated metal foil formed by joining a metal substrate layer (referred to merely as "substrate layer" hereinafter) that does not form an alloy with Li and an Al metal layer (referred to merely as "Al layer" hereinafter) is used to form the negative electrode according to the second aspect of the non-aqueous electrolyte battery of the present invention.

The above-mentioned substrate layer can be made of a metal such as Cu, Ni, Ti, or Fe, or an alloy of such an element and another element (it should be noted that an alloy such as stainless steel that does not react with Li is used). Specifically, the substrate layer is constituted by a foil, a vapor deposition film, a plating film, or the like made of the above-mentioned metal or alloy.

The above-mentioned Al layer can be made of pure Al or an Al alloy including an element that has been added for the purpose of the improvement of the strength or the like. Specifically, the Al layer is constituted by a foil, a vapor deposition film, a plating film, or the like made of pure Al or the Al alloy.

A method of attaching a Li foil to the surface of the above-mentioned Al layer, a method of forming a vapor deposition film thereon, or the like can be used to form the above-mentioned Li layer.

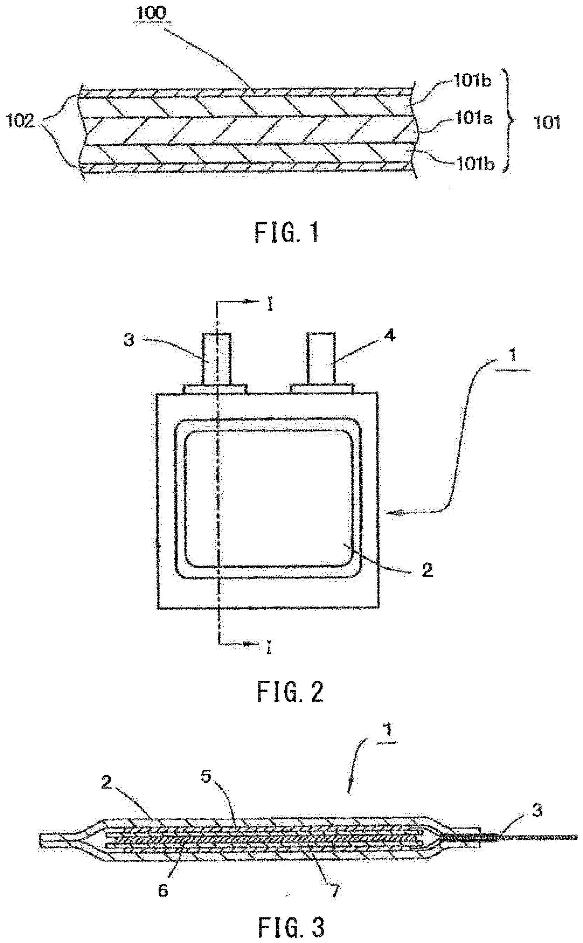

FIG. 1 is a schematic cross-sectional view illustrating an example of a laminate (negative electrode precursor) for forming a negative electrode to be used in the second aspect of the non-aqueous electrolyte battery of the present invention. A negative electrode precursor 100 shown in FIG. 1 is formed by attaching Li foils 102 to the surfaces of Al layers 101b of a laminated metal foil 101 obtained by joining Al layers 101b to both sides of a substrate layer 101a.

In the non-aqueous electrolyte battery in which the above-mentioned negative electrode precursor is used to form the negative electrode, Li in the Li foil and Al in the Al layer react in the presence of the non-aqueous electrolyte to form a Li-Al alloy on a side (separator side) of the Al layer to which the Li foil has been attached, and the Al layer thus changes into an Al active layer. In other words, the Li-Al alloy formed in the non-aqueous electrolyte battery is present on at least the surface side (Li foil side) of the Al active layer of the above-mentioned negative electrode.

In the laminated metal foil formed by joining the substrate layer and the Al layer to each other, the Al layer may be joined to one side of the substrate layer, or the Al layers may be joined to both sides of the substrate layer as shown in FIG. 1. In the laminate formed by attaching the laminated metal foil, which is formed by joining the substrate layer and the Al layer to each other, and the Li foil to each other, when the Al layer is joined to one side of the substrate layer, it is sufficient that the Li foil is attached to the surface of the Al layer (surface that is not joined to the substrate layer), and when the Al layers are joined to both sides of the substrate layer as shown in FIG. 1, it is sufficient that the Li foils are attached to the surfaces of both Al layers (surfaces that are not joined to the substrate layer).

It should be noted that when the Al layers are joined to both sides of the substrate layer, and the Li-Al alloy is formed on the surfaces of both Al layers, the deformation (e.g., bending) of the negative electrode and the deterioration of the characteristics of the battery caused by such deformation can be further suppressed compared to the case where the Al layer is joined to one side of the substrate layer and the Li-Al alloy is formed on the surface of the Al layer.

In the following description, the case where the substrate layer is made of Ni (Ni foil) is given as an example, but a case where the substrate layer is made of a material other than Ni is also the same as described below.

Examples of the laminated metal foil formed by joining a Ni layer and an Al layer include a clad material including a Ni foil and an Al foil, and a laminated film in which Al is deposited on a Ni foil to form an Al layer.

Examples of the Ni layer according to the laminated metal foil formed by joining a Ni layer and an Al layer include a layer made of Ni (and inevitable impurities), and a layer made of a Ni alloy containing Zr, Cr, Zn, Cu, Fe, Si, P and the like as alloy components in a total amount of 20 mass% or less, Ni and inevitable impurities making up the remaining portions.

Examples of the Al layer according to the laminated metal foil formed by joining a Ni layer and an Al layer include a layer made of Al (and inevitable impurities), and a layer made of a Al alloy containing Fe, Ni, Co, Mn, Cr, V, Ti, Zr, Nb, Mo and the like as alloy components in a total amount of 50 mass% or less, Al and inevitable impurities making up the remaining portions.

In the laminated metal foil formed by joining a Ni layer and an Al layer, in order to set the ratio of the Li-Al alloy serving as the negative electrode active material to be greater than or equal to a certain ratio, the thickness of the Al layer (it should be noted that when the Al layers are joined to both sides of the Ni layer, the thickness refers to the thickness of the Al layer on each side; the same applies hereinafter) is preferably 20 or more, more preferably 50 or more, and even more preferably 70 or more when the thickness of the Ni layer is given as 100. In addition, in the laminated metal foil formed by joining a Ni layer and an Al layer, in order to improve the current collection effect and retain the sufficient amount of Li-Al alloy, the thickness of the Al layer is preferably 500 or less, more preferably 400 or less, even more preferably 200 or less, and even more preferably 180 or less when the thickness of the Ni layer is given as 100.

It should be noted that the thickness of the Ni layer is preferably 10 to 50 µm, and more preferably 40 µm or less. The thickness of the Al layer (it should be noted that when the Al layers are joined to both sides of the Ni layer, the thickness refers to the thickness of the Al layer on each side) is preferably 10 µm or more, more preferably 20 µm or more, and even more preferably 30 µm or more, while the thickness is preferably 150 µm or less, more preferably 70 µm or less, and even more preferably 50 µm or less.

The thickness of the laminated metal foil formed by joining a Ni layer and an Al layer is preferably 50 µm or more, and more preferably 60 µm or more in order to set the capacity of the negative electrode to be greater than or equal to a certain value, while the thickness is preferably 300 µm or less, more preferably 200 µm or less, and even more preferably 150 µm or less in order to set the capacity ratio with respect to the positive electrode active material to be within an appropriate range.

It should be noted that when a Cu layer is used as the substrate layer instead of the Ni layer, examples of the Cu layer include a layer made of Cu (and inevitable impurities), and a layer made of a Cu alloy containing Zr, Cr, Zn, Ni, Si, P and the like as alloy components in a total amount of 1 mass% or less, Cu and inevitable impurities making up the remaining portions. The favorable thickness of the Cu layer (favorable thickness of the Al layer when the thickness of the Cu layer is given as 100), and the favorable thickness of the laminated metal foil including the Cu layer are the same as those in the case where the Ni layer is used.

Examples of the Li foil used in the negative electrode precursor include a foil made of Li (and inevitable impurities), and a foil made of a Li alloy containing Fe, Ni, Co, Mn, Cr, V, Ti, Zr, Nb, Mo and the like as alloy components in a total amount of 40 mass% or less, Li and inevitable impurities making up the remaining portions.

The Al active layer included in the negative electrode can also be formed using, as a second method, a method in which the above-mentioned laminated metal foil is used as-is as a negative electrode precursor and assembled in a battery, followed by charging of the battery assembled, other than the method in which the above-mentioned laminate formed by attaching the Li foil to the surface of the laminated metal foil is used as a negative electrode precursor to form the Al active layer of the negative electrode.

In other words, it is also possible to form the Al active layer in which a Li-Al alloy is formed on at least the surface side of the Al metal layer of the above-mentioned laminated metal foil by causing at least Al on the surface side of the Al metal layer to react electrochemically with Li ions in the non-aqueous electrolytic solution through charging of the battery.

With the second method in which the above-mentioned laminated metal foil to which no Li foil is attached is used as a negative electrode precursor, a process for manufacturing a battery can be simplified. However, when a negative electrode precursor is used to form the Al active layer, Li in the Li layer of the negative electrode precursor cancels the irreversible capacity of the Li-Al alloy. Therefore, in order to achieve high capacity, it is preferable that the negative electrode is formed (the Al active layer of the negative electrode is formed) using the first method, and the negative electrode may be formed (the Al active layer of the negative electrode may be formed) by assembling the negative electrode precursor according to the first method in a battery, followed by charging of a battery.

In the second aspect of the non-aqueous electrolytic solution battery, when the Al active layer of the negative electrode is formed using either the first method or the second method, it is preferable to use the battery in a state in which the content of Li is within a range of 48 atom% or less when the total content of Li and Al in the Al active layer of the negative electrode is given as 100 atom%, from the viewpoint of favorably maintaining the crystal structure of a material acting as the negative electrode active material to stabilize the electric potential of the negative electrode and ensure better storage characteristics. In other words, when the battery is charged, charging is preferably stopped before the content of Li in the Al active layer exceeds 48 atom%, more preferably before the content of Li exceeds 40 atom%, and even more preferably before the content of Li exceeds 35 atom%.

Although the overall Al layer of the above-mentioned laminated metal foil may form an alloy with Li and acts as an active material, it is more preferable that the substrate layer side of the Al layer is prevented from forming an alloy with Li, and the Al active layer having a laminated structure including a Li-Al alloy layer on the surface side and an Al layer remaining on the substrate side is thus formed.

Specifically, it is inferred that when charging is stopped in the above-mentioned state, a Li-Al alloy (mixed phase of an α phase and a β phase, or a β phase) will be formed by causing the separator side (positive electrode side) of the above-mentioned Al layer to react with Li, while a portion of the Al layer near the portion where the Al layer and the above-mentioned substrate layer are joined to each other will not substantially react with Li and will remain as- is, or the content of Li in this portion will be smaller than that on the separator side. Therefore, it is thought that excellent adhesion between the original Al layer and the substrate layer can be maintained, thus making it easy to keep the Li-Al alloy formed on the separator side on the substrate layer. In particular, it is more preferable that charging is stopped in a state in which an α phase is mixed in the Li-Al alloy formed on the separator side of the above-mentioned Al layer.

It should be noted that the term "Al that does not substantially form an alloy with Li" used in the present invention refers to Al in an α phase in which a solid solution with Li containing Li in an amount within a range of several at% or less is formed, as well as a state in which the Al layer contains no Li, and the term "not substantially react with Li" refers to a state in which Al in an α phase is maintained as-is, including also a state in which a solid solution with Li containing Li in an amount within a range of several at% or less is formed.

In the second aspect of the non-aqueous electrolyte battery, when the total content of Li and Al is given as 100 atom%, the battery is preferably charged until the content of Li increases to 20 atom% or more, and more preferably until the content of Li increases to 30 atom% or more, from the viewpoint of further improving the capacity and heavy load discharge characteristics.

The content of Li when the total content of Li and Al is given as 100 atom% can be determined by inductively coupled plasma (ICP) elementary analysis, for example. A battery including a negative electrode to be subjected to determination of the content of Li is disassembled in an Ar box, and the negative electrode is removed. A portion of the negative electrode that faced the positive electrode is cut into an approximately 10-mm square size and dissolved in acid. The resultant solution is subjected to ICP elementary analysis to determine the ratio between Al and Li, and the content of Li is calculated using the obtained value. Values shown in Examples, which will be described later in this specification, are determined using this method.

In order to easily realize the battery usage as mentioned above, in the negative electrode precursor used to form the negative electrode according to the first method in the second aspect of the non-aqueous electrolyte battery, when the thickness of the Al layer is given as 100, the thickness of the Li layer attached to the Al layer is desirably 20 or more, and more desirably 30 or more, at the time of the assembly of a battery, while the thickness of the Li layer is desirably 80 or less, and more desirably 70 or less.

Specifically, the thickness of the Li foil on each side of the above-mentioned laminate is preferably 20 µm or more, and more preferably 30 µm or more, while the thickness of the Li foil is preferably 80 µm or less, and more preferably 70 µm or less.

The Li foil and the Al layer can be attached to each other using an ordinary method such as pressure bonding.

The above-mentioned laminate, which is used as the negative electrode precursor used to form the negative electrode in the first method, can be manufactured using a method of attaching a Li foil to the surface of an Al layer of a foil that is formed by joining a Ni layer and an Al layer to each other.

In accordance with an ordinary method, a negative electrode lead body can be provided on the Ni layer of the above-mentioned laminate, which is used as the negative electrode precursor used in the first method and the second method for forming the negative electrode.

Next, details of constituents and structures that are common to the first aspect and the second aspect of the non-aqueous electrolyte secondary battery of the present invention will be described.

### Positive electrode

The positive electrode includes a positive electrode mixture containing a positive electrode active material capable of occluding and releasing lithium ions, a conductive assistant, and a binder. For example, a positive electrode having a structure in which a layer (positive electrode mixture layer) made of the above-mentioned positive electrode mixture is formed on one side or both sides of a current collector, and a molded article made of the above-mentioned positive electrode mixture can be used as the positive electrode.

When a primary battery is formed, examples of the positive electrode active material according to the positive electrode mixture include materials, such as manganese dioxide, graphite fluoride, and iron disulfide, used as the positive electrode active materials of ordinary non-aqueous electrolyte primary batteries. When a secondary battery is formed, examples of the positive electrode active material include lithium-containing composite compounds that can occlude and release lithium ions and are used as the positive electrode active materials of ordinary non-aqueous electrolyte secondary batteries. Examples of such lithium-containing composite compounds include lithium-containing composite oxides having a layer structure represented by Li₁₊ₓM¹O₂ (-0.1<x<0.1, M¹: one or more elements selected from Co, Ni, Mn, Al, Mg, Ti, Zr and the like); lithium manganese composite oxides having a spinel structure such as LiMn₂O₄ and substitution products thereof obtained by substituting a portion of the elements in LiMn₂O₄ with other elements; lithium titanium composite oxides having a spinel structure such as Li_{4/3}Ti_{5/3}O₄ and substitution products thereof obtained by substituting a portion of the elements in Li_{4/3}Ti_{5/3}O₄ with other elements; lithium manganese composite oxides synthesized at a low temperature represented by a composition LiMn₃O₆ and the like; and olivine compounds represented by LiM²PO₄ (M²: one or more elements selected from Co, Ni, Mn, Fe and the like). Examples of the lithium-containing composite oxides having a layer structure include lithium cobalt oxides such as LiCoO₂; and lithium-containing nickel composite oxides such as LiNi₁₋ₐCo_{a-b}Al_{b}O₂ (0.1≤a≤0.3, 0.01≤b≤0.2) and oxides containing at least Co, Ni, and Mn (e.g., LiMn_{1/3}Ni_{1/3}Co_{1/3}O₂, LiMn_{5/12}Ni_{5/12}Co_{1/6}O₂, and LiNi_{3/5}Mn_{1/5}Co_{1/5}O₂).

When the positive electrode active material of a secondary battery has a large irreversible capacity, it is preferable that a laminate of a negative electrode current collector and an Al layer is used as a negative electrode precursor and assembled in a battery, and the assembled battery is charged to form a Li-Al alloy on the negative electrode because the negative electrode can partially or entirely cancel the irreversible capacity of the positive electrode.

Examples of the binder according to the positive electrode mixture include the same binders as the various binders (e.g., PVDF, PTFE, SBR, and CMC) listed above as the examples of the binders that can be added to the negative electrode mixture layer, imide-based binders (e.g., polyamideimide and polyimide), and amide-based binders (e.g., polyamide and aramid).

Examples of the conductive assistant according to the positive electrode mixture include the same conductive assistants as the various conductive assistants (e.g., carbon materials including graphite (graphite carbon material) such as natural graphite (e.g., flake graphite) and synthetic graphite; carbon black such as acetylene black, Ketjen black, channel black, furnace black, lampblack, and thermal black; and carbon fibers) listed above as the examples of the conductive assistant that can be added to the negative electrode mixture layer.

A positive electrode constituted by a molded article made of a positive electrode mixture can be manufactured by pressing a positive electrode mixture prepared by mixing the positive electrode active material, the conductive assistant, and the binder into a predetermined shape.

A positive electrode including a positive electrode mixture layer and a current collector can be manufactured, for example, through steps of preparing a composition (e.g., slurry or paste) containing a positive electrode mixture by dispersing a positive electrode active material, a conductive assistant, a binder, and the like in an organic solvent such as water or NMP (it should be noted that the binder may be dissolved in the solvent), applying this composition to a current collector, drying the composition, and optionally performing press processing such as calendering processing.

The content of the positive electrode active material in the positive electrode mixture is preferably 80 to 98.8 mass%. The content of the conductive assistant in the positive electrode mixture is preferably 1.5 to 10 mass%. The content of the binder in the positive electrode mixture is preferably 0.3 to 10 mass%.

The thickness of the molded article made of the positive electrode mixture is preferably 0.15 to 4 mm. On the other hand, in the positive electrode including a positive electrode mixture layer and a current collector, the thickness of the positive electrode mixture layer (on each side of the current collector) is preferably 30 to 300 µm.

In general, a foil, a punched metal, a net, an expanded metal, or the like made of a metal such as Al or an Al alloy can be favorably used as the current collector of the positive electrode. The thickness of the positive electrode current collector is preferably 10 to 30 µm.

A lead body for electrical connection to another member in a battery can be attached to the positive electrode using an ordinary method.

### Electrode body

In the non-aqueous electrolyte battery, the positive electrode and the negative electrode are layered via a separator to form a laminate (layered electrode body that is not wound and in which the positive electrode and the negative electrode are layered via the separator and arranged substantially in parallel to the flat surface of the sheathing body of the battery, for example) and used in this form. Alternatively, the positive electrode and the negative electrode are used in the form of a wound body (wound electrode body) obtained by winding the above-mentioned laminate into a spiral shape.

### Separator

It is preferable that the separator has a property of closing pores (i.e., shutdown function) at 80°C or higher (preferably 100°C or higher) and 170°C or lower (preferably 150°C or lower), and separators used in ordinary non-aqueous electrolyte secondary batteries and the like, such as microporous membranes made of polyolefine (e.g., polyethylene (PE) and polypropylene (PP)), can be used. For example, the microporous membrane included in the separator may be a microporous membrane made of only PE or only PP, or a laminate of a microporous membrane made of PE and a microporous membrane made of PP. The thickness of the separator is preferably 10 to 30 µm, for example.

In order to improve the heat resistance, it is also possible to use a layered separator in which a heat-resistant porous layer containing an inorganic filler is provided on the surface of the microporous membrane made of polyolefine as mentioned above; a non-woven fabric separator made of fluororesin such as tetrafluoroethylene-perfluoroalkoxyethylene copolymer (PFA) or heat-resistant resin such as polyphenylene sulfide (PPS), polyether ether ketone (PEEK), polybutylene terephthalate (PBT), polymethylpentene, cellulose, aramid, polyimide, or polyamideimide; or the like.

### Form of non-aqueous electrolyte battery

The non-aqueous electrolyte battery is manufactured by inserting the layered electrode body into a sheathing body, pouring the non-aqueous electrolyte into the sheathing body to immerse the electrode body in the non-aqueous electrolyte, and then sealing the opening of the sheathing body. A sheathing can made of steel, aluminum, or an aluminum alloy, or a sheathing body made of a metal-deposited laminate film can be used as the sheathing body. More specific examples of the battery including a sheathing can include flat-shaped batteries (including coin-shaped batteries and button-shaped batteries) with a battery case that are sealed by crimping a sheathing can and a sealing plate via a gasket or sealed by welding a sheathing can and a sealing plate; and tubular batteries that are sealed by crimping a lid arranged at the opening of a sheathing can having a closed-ended tubular shape (e.g., cylindrical shape or rectangular tubular shape) via a gasket or sealed by welding a sheathing can and a lid.

After the assembly of the battery (the battery of the first aspect in which a Li-AL alloy is used as the negative electrode material, or the battery of the second aspect) is completed, it is preferable to perform aging processing on the fully charged battery at a relatively high temperature (e.g., 60°C). The formation of a Li-Al alloy in the negative electrode proceeds due to the above-mentioned aging processing, and therefore, the capacity and the load characteristics of the battery are improved.

### Examples

Hereinafter, the present invention will be described in detail by way of examples. However, the present invention is not limited to the following examples.

### Examples of the first aspect

### Example 1

A clad material (laminated metal foil) having a size of 25 mm × 37 mm obtained by layering Al foils having a thickness of 30 µm on both sides of a Ni foil having a thickness of 40 µm was prepared. A negative electrode precursor for forming a negative electrode was formed by welding a Cu foil for current collection to an end of the above-mentioned clad material through ultrasonic welding, and welding a Ni tab for conductive connection to the outside of a battery to an end of the Cu foil. This negative electrode precursor was assembled in a battery.

On the other hand, a positive electrode was produced as follows. A slurry obtained by dispersing 97.26 parts by mass of lithium cobalt oxide, 1.5 parts by mass of acetylene black serving as a conductive assistant, 0.08 parts by mass of synthetic graphite, 1.06 parts by mass of PVDF serving as a binder, and 0.09 parts by mass of polyvinyl pyrrolidone serving as a dispersant in NMP was prepared. This slurry was applied to one side of an Al foil having a thickness of 12 µm, dried, and pressed. A positive electrode mixture layer having a mass of approximately 18 mg/cm² was thus formed on one side of an Al foil current collector. It should be noted that an area in which the positive electrode mixture layer was not formed and from which the Al foil was exposed was provided on a portion of the surface to which the slurry was applied. Furthermore, heat treatment was performed at 100°C for 12 hours. Next, the above-mentioned Al foil current collector was cut into a size of 20 mm × 42 mm, and an Al tab for conductive connection to the outside of a battery was welded to the above-mentioned area from which the Al foil was exposed through ultrasonic welding. A positive electrode in which the positive electrode mixture layer having a size of 20 mm × 29 mm was formed on one side of the current collector was thus produced.

A commercially available separator in which a porous membrane having a thickness of 2 µm obtained by bonding boehmite particles with acrylic resin is formed on one side of a microporous film made of PE having a thickness of 16 µm was used, and a battery was assembled as follows. A set of layered electrode bodies were produced by layering the above-mentioned positive electrodes on both sides of the above-mentioned negative electrode precursor to which the Ni tab had been welded, via the above-mentioned separators. LiBF₄ was dissolved in a mixed solvent containing PC and MEC at a volume ratio of 1:2 to give a concentration of 1.2 mol/l, and then adiponitrile, γ-butyrolactone, and tris(trimethylsilyl) phosphate were added thereto to give concentrations of 3 mass%, 0.5 mass%, and 1 mass%, respectively. A non-aqueous electrolytic solution was thus prepared. The above-mentioned electrode body was dried under vacuum at 60°C for 15 hours, and then encapsulated together with the above-mentioned non-aqueous electrolytic solution in a laminate film, sheathing body. A non-aqueous electrolyte secondary battery with a rated capacity of 20 mAh that had an appearance shown in FIG. 2 and a cross-sectional structure shown in FIG. 3 was thus produced.

The following are descriptions of FIG. 2 and FIG. 3. FIG. 2 is a schematic plan view of the non-aqueous electrolyte battery (secondary battery) and FIG. 3 is a cross-sectional view taken along line I-I in FIG. 2. In a non-aqueous electrolyte battery 1, the layered electrode body formed by layering positive electrodes 5 and a negative electrode 6 via separators 7 and the non-aqueous electrolytic solution (not shown) are accommodated in a laminate film sheathing body 2 including two laminate films. The laminate film sheathing body 2 is sealed by thermally welding the outer peripheral regions of the upper and lower laminate films. It should be noted that the layers included in the laminate film sheathing body 2, the layers included in the positive electrodes 5 and the negative electrode 6, and the layers included in the separators 7 are not distinctively shown in FIG. 3 in order to avoid complication in the figure.

The positive electrode 5 is connected to a positive electrode external terminal 3 via a lead body in the battery 1, and the negative electrode 6 is also connected to a negative electrode external terminal 4 via a lead body in the battery 1, which is not shown in the drawings. One end of the positive electrode external terminal 3 and one end of the negative electrode external terminal 4 are drawn out of the laminate film sheathing body 2 so as to be capable of being connected to external devices.

### Example 2

A non-aqueous electrolyte secondary battery was produced in the same manner as in Example 1, except that the content of tris(trimethylsilyl) phosphate in the non-aqueous electrolytic solution was set to 2 mass%.

### Example 3

A non-aqueous electrolyte secondary battery was produced in the same manner as in Example 1, except that the content of tris(trimethylsilyl) phosphate in the non-aqueous electrolytic solution was set to 5 mass%.

### Example 4

A non-aqueous electrolyte secondary battery was produced in the same manner as in Example 1, except that the content of tris(trimethylsilyl) phosphate in the non-aqueous electrolytic solution was set to 8 mass%.

### Example 5

A non-aqueous electrolyte secondary battery was produced in the same manner as in Example 1, except that a mixed solvent containing EC and MEC at a volume ratio of 1:2 was used as the mixed solvent for the non-aqueous electrolytic solution.

### Example 6

A non-aqueous electrolyte secondary battery was produced in the same manner as in Example 1, except that a non-aqueous electrolytic solution containing only 3 mass% of adiponitrile and 0.5 mass% of γ-butyrolactone, but no tris(trimethylsilyl) phosphate was used as the non-aqueous electrolytic solution.

### Example 7

A non-aqueous electrolyte secondary battery was produced in the same manner as in Example 1, except that the content of tris(trimethylsilyl) phosphate in the non-aqueous electrolytic solution was set to 10 mass%.

### Comparative Example 1

A non-aqueous electrolytic solution containing no tris(trimethylsilyl) phosphate, no adiponitrile, and no γ-butyrolactone that was obtained by merely dissolving LiBF₄ in the mixed solvent containing PC and MEC at a volume ratio of 1:2 to give a concentration of 1.2 mol/l was prepared. A non-aqueous electrolyte secondary battery was produced in the same manner as in Example 1, except that the above-mentioned electrolytic solution was used.

### Comparative Example 2

A negative electrode mixture layer containing synthetic graphite having an average particle diameter of 20 µm, styrene-butadiene rubber, and carboxymethylcellulose was formed on a Cu current collecting foil, and a negative electrode including a graphite-based negative electrode active material was thus produced. A non-aqueous electrolyte secondary battery was produced in the same manner as in Example 5, except that the above-mentioned negative electrode was used.

Regarding the non-aqueous electrolyte secondary batteries of Examples 1 to 7 and Comparative Examples 1 and 2, initial charging and discharging efficiency, and characteristics (discharge capacity and low-temperature load characteristics) after storage at a high temperature were evaluated.

### Evaluation of initial charging and discharging efficiency

The batteries of Examples 1 to 7 and Comparative Examples 1 and 2 were charged with a constant current (4 mA) and a constant voltage (4.0 V). When the charging current decreased to 0.2 mA, charging was stopped, and the initial charge capacities were measured. Al in the negative electrode precursor formed a Li-Al alloy due to this charging. Next, the charged batteries were discharged with a constant current of 4 mA (discharge cut-off voltage: 2 V), and the initial discharge capacities were measured. Then, a value obtained by dividing the initial discharge capacity with the initial charge capacity was expressed by percentage, and the initial charging and discharging efficiency of each battery was thus calculated.

### Evaluation of characteristics after storage at a high temperature

The batteries of Examples 1 to 7 and Comparative Examples 1 and 2 (it should be noted that the batteries were different from those used for the measurement of initial charging and discharging efficiency) were charged with a constant current (4 mA) and a constant voltage (4.0 V). When the charging current decreased to 0.2 mA, charging was stopped. Next, the charged batteries were discharged with a constant current of 4 mA (discharge cut-off voltage: 2 V).

Next, the above-mentioned discharged batteries were charged with a constant current and a constant voltage in the same condition as mentioned above, and then were stored at 100°C for 5 days. After storage, the batteries were cooled to room temperature, and then discharged with a constant current of 4 mA (discharge cut-off voltage: 2 V). Subsequently, after being charged with a constant current and a constant voltage in the same condition as mentioned above, the batteries were discharged with a constant current of 4 mA (0.2 C) (discharge cut-off voltage: 2 V), and then the discharge capacities at room temperature after storage at a high temperature were measured.

The batteries of Examples 1 to 7 and Comparative Examples 1 and 2 (it should be noted that the batteries were different from those used for the measurement of initial charging and discharging efficiency and those used for the measurement of discharge capacity after storage at a high temperature) were charged with a constant current and a constant voltage, discharged, charged with a constant current and a constant voltage, stored at 100°C for 5 days, cooled, and then discharged with a constant current in the same conditions as those in the measurement of discharge capacity after storage at a high temperature. Subsequently, after being charged with a constant current and a constant voltage in the same condition as mentioned above, the batteries were left to stand in an environment at -20°C. After the temperatures of the batteries lowered, the batteries were discharged with a constant current of 28 mA (1.4 C) (discharge cut-off voltage: 2 V), and then the discharge capacities at a low temperature after storage at a high temperature were measured. The low-temperature load characteristics after storage at a high temperature were evaluated based on the discharge capacities at this time.

Table 1 shows the results of the above-mentioned evaluations.

**Table 1**

| | Content of phosphoric acid compound (mass%) | Initial charging and discharging efficiency (%) | Discharge capacity after storage at high temperature (mAh) | |
|---|---|---|---|---|
| | | | 0.2 C at room temperature | 1.4 C at low temperature |
| Ex. 1 | 1 | 68 | 19 | 6 |
| Ex. 2 | 2 | 72 | 20 | 9 |
| Ex. 3 | 5 | 71 | 19 | 7 |
| Ex. 4 | 8 | 69 | 18 | 5 |
| Ex. 5 | 1 | 68 | 17 | 2 |
| Ex. 6 | 0 | 65 | 19 | 4 |
| Ex. 7 | 10 | 68 | 16 | 2 |
| Comp. Ex. 1 | 0 | 68 | 14 | 0 |
| Comp. Ex. 2 | 1 | 80 | 8 | 0 |

The initial charging and discharging efficiencies and the load characteristics at a low temperature after storage at a high temperature of the batteries of the examples of the present invention were improved compared to the battery of Comparative Example 1 to which tris(trimethylsilyl) phosphate had not been added. In particular, the battery of Example 2 in which the addition amounts of the above-mentioned additives were set to be within the most favorable ranges had particularly excellent characteristics.

In the batteries of Examples 1 to 4 in which the content of propylene carbonate was 20 vol% or more in the total of solvents, compared to the battery of Example 5 in which propylene carbonate was replaced with ethylene carbonate, the effects of the above-mentioned additives were clearly exhibited, and the load characteristics at a low temperature after storage at a high temperature were significantly improved.

On the other hand, regarding the battery of Example 6, the above-mentioned additives were not added thereto, and therefore, the effects of the additives were not exhibited. Regarding the battery of Example 7, the addition amounts of the above-mentioned additives were too large, and therefore, deterioration of the load characteristics due to an increase of resistance was observed. Accordingly, the discharge capacities after storage at a high temperature of the batteries of Examples 6 and 7 decreased compared to the batteries of Examples 1 to 4, but the non-aqueous electrolyte according to the second aspect was used, and therefore, the characteristics after storage at a high temperature were improved compared to the battery of Comparative Example 3 in which the electrolytic solution did not contain additives at all. In the battery of Comparative Example 2, graphite was used as the negative electrode active material, and therefore, the effects of the addition of tris(trimethylsilyl) phosphate to the electrolytic solution deteriorated compared to the battery of Example 5 in which the Li-Al alloy was used as the negative electrode active material.

### Example 8

A negative electrode precursor was formed and assembled in a battery in the same manner as in Example 1, except that a clad material (laminated metal foil) having a size of 160 mm × 25 mm obtained by layering Al foils having a thickness of 30 µm on both sides of a Ni foil having a thickness of 40 µm was used.

A positive electrode was produced as follows. An Al foil current collector having a thickness of 12 µm was cut into a size of 164 mm × 20 mm, and an Al tab for conductive connection to the outside of a battery was welded to the above-mentioned area from which the Al foil was exposed through ultrasonic welding. A positive electrode in which the positive electrode mixture layer having a length of 89 mm was formed on one side of the current collector and the positive electrode mixture layer having a length of 149 mm was formed on the other side was thus produced.

The above-mentioned negative electrode and positive electrode were wound into a spiral shape with a separator that was the same as that in Example 1 being sandwiched therebetween and then pressed. A wound electrode body having a flat shape was thus produced. A non-aqueous electrolyte secondary battery with a rated capacity of 82 mAh was produced in the same manner as in Example 1, except that this wound electrode body was used.

### Evaluation of initial charging and discharging efficiency

The battery of Example 8 was charged with a constant current (16.4 mA) and a constant voltage (4.0 V). When the charging current decreased to 0.82 mA, charging was stopped, and the initial charge capacity was measured. Al in the negative electrode precursor formed a Li-Al alloy due to this charging. Next, the charged battery was discharged with a constant current of 16.4 mA (discharge cut-off voltage: 2 V), and the initial discharge capacity was measured. Then, a value obtained by dividing the initial discharge capacity with the initial charge capacity was expressed by percentage, and the initial charging and discharging efficiency of the battery was thus calculated.

### Evaluation of characteristics after storage at a high temperature

The battery of Example 8 (it should be noted that the battery was different from that used for the measurement of initial charging and discharging efficiency) was charged with a constant current (16.4 mA) and a constant voltage (4.0 V). When the charging current decreased to 0.82 mA, charging was stopped. Next, the charged battery was discharged with a constant current of 16.4 mA (discharge cut-off voltage: 2 V).

Next, the above-mentioned discharged battery was charged with a constant current and a constant voltage in the same condition as mentioned above, and then was stored at 100°C for 5 days. After storage, the battery was cooled to room temperature, and then discharged with a constant current of 16.4 mA (discharge cut-off voltage: 2 V). Subsequently, after being charged with a constant current and a constant voltage in the same condition as mentioned above, the battery was discharged with a constant current of 16.4 mA (0.2 C) (discharge cut-off voltage: 2 V), and then the discharge capacity at room temperature after storage at a high temperature was measured. The high-temperature storage characteristics of the battery were evaluated based on the ratio (recovery rate) of the discharge capacity after storage at a high temperature to the rated capacity.

The battery of Example 8 (it should be noted that the battery was different from that used for the measurement of initial charging and discharging efficiency and that used for the measurement of discharge capacity after storage at high temperatures) was charged with a constant current and a constant voltage, discharged, charged with a constant current and a constant voltage, stored at 100°C for 5 days, cooled, and then discharged with a constant current in the same conditions as those in the measurement of discharge capacity after storage at a high temperature. Subsequently, after being charged with a constant current and a constant voltage in the same condition as mentioned above, the battery was left to stand in an environment at -20°C. After the temperature of the battery lowered, the battery was discharged with a constant current of 114.8 mA (1.4 C) (discharge cut-off voltage: 2 V), and then the discharge capacity at a low temperature after storage at a high temperature was measured. The low-temperature load characteristics after storage at a high temperature were evaluated based on the discharge capacity at this time.

Table 2 shows the results of the above-mentioned evaluations. Table 2 also shows the above-mentioned evaluation results of the battery of Example 1.

**Table 2**

| | Content of phosphoric acid compound (mass%) | Rated capacity (mAh) | Initial charging and discharging efficiency (%) | Discharge capacity after storage at high temperature | | | |
|---|---|---|---|---|---|---|---|
| | | | | 0.2 C at room temperature | | 1.4 C at low temperature | |
| | | | | Evaluation result (mAh) | Recovery rate with respect to rated capacity (%) | Evaluation result (mAh) | Recovery rate with respect to rated capacity (%) |
| Ex. 1 | 1 | 20 | 68 | 19 | 95 | 6 | 30 |
| Ex. 8 | 1 | 82 | 67 | 78 | 95 | 24 | 29 |

As shown in Table 2, as was the case with the battery of Example 1 in which the layered electrode body was used, the non-aqueous electrolyte secondary battery of Example 8 in which the wound electrode body was used had a favorable initial charging and discharging efficiency and favorable low-temperature load characteristics after storage at a high temperature.

### Examples of the second aspect

### Example 9

A clad material (laminated metal foil) having a size of 25 mm × 40 mm obtained by layering Al foils having a thickness of 30 µm on both sides of a Ni foil having a thickness of 30 µm was used as a negative electrode precursor. A Cu foil for current collection was welded to an end of the above-mentioned clad material through ultrasonic welding, and a Ni tab for conductive connection to the outside of a battery to an end of the Cu foil. The thus obtained negative electrode precursor was assembled in a battery.

On the other hand, a positive electrode was produced as follows. A slurry obtained by dispersing 97 parts by mass of lithium cobalt oxide, 1.5 parts by mass of acetylene black serving as a conductive assistant, and 1.5 parts by mass of PVDF serving as a binder in NMP was prepared. This slurry was applied to one side of an Al foil having a thickness of 12 µm, dried, and pressed. A positive electrode mixture layer having a mass of approximately 23 mg/cm² was thus formed on one side of an Al foil current collector. It should be noted that an area in which the positive electrode mixture layer was not formed and from which the Al foil was exposed was provided on a portion of the surface to which the slurry was applied. Next, the above-mentioned Al foil current collector was cut into a size of 20 mm × 45 mm, and an Al tab for conductive connection to the outside of a battery was welded to the above-mentioned area from which the Al foil was exposed through ultrasonic welding. A positive electrode in which the positive electrode mixture layer having a size of 20 mm × 30 mm was formed on one side of the current collector was thus produced.

A set of layered electrode bodies were produced by layering the above-mentioned positive electrodes on both sides of the above-mentioned negative electrode precursor to which the Ni tab had been welded, via separators constituted by a microporous film made of PE having a thickness of 16 µm. LiBF₄ was dissolved in a mixed solvent containing propylene carbonate (PC) and ethylmethyl carbonate (EMC) at a volume ratio of 1:2 to give a concentration of 1 mol/l, and then adiponitrile was added thereto in an amount to give a concentration of 3 mass%. A non-aqueous electrolytic solution was thus prepared. The above-mentioned electrode body was dried under vacuum at 60°C for 15 hours, and then encapsulated together with the above-mentioned non-aqueous electrolytic solution in a laminate film sheathing body. A non-aqueous electrolytic solution secondary battery with a rated capacity of 30 mAh that had an appearance shown in FIG. 2 and a cross-sectional structure shown in FIG. 3 was thus produced.

### Example 10

A non-aqueous electrolytic solution battery with a rated capacity of 30 mAh was produced in the same manner as in Example 9, except that a clad material (laminated metal foil) having a size of 25 mm × 40 mm obtained by layering Al foils having a thickness of 30 µm on both sides of a Cu foil having a thickness of 30 µm was used as the negative electrode precursor.

### Example 11

A clad material (laminated metal foil) having a size of 25 mm × 40 mm obtained by layering an Al foil having a thickness of 30 µm on one side of a Ni foil having a thickness of 30 µm was used as the negative electrode precursor. A Cu foil for current collection was welded to an end of the above-mentioned clad material through ultrasonic welding, and a Ni tab for conductive connection to the outside of a battery was welded to an end of the Cu foil through ultrasonic welding. The thus obtained negative electrode precursor was assembled in a battery.

On the other hand, a positive electrode was produced as follows. The same slurry as that in Example 9 was applied to both sides of an Al foil having a thickness of 12 µm, dried, and pressed. A positive electrode mixture layer having a mass of approximately 23 mg/cm² was thus formed on each side of an Al foil current collector. It should be noted that an area in which the positive electrode mixture layer was not formed and from which the Al foil was exposed was provided on a portion of each surface of the Al foil. Next, the above-mentioned Al foil current collector was cut into a size of 20 mm × 45 mm, and Al tabs for conductive connection to the outside of a battery were welded to the above-mentioned areas from which the Al foil was exposed through ultrasonic welding. A positive electrode in which the positive electrode mixture layers having a size of 20 mm × 30 mm were formed on both sides of the current collector was thus produced.

A set of electrode bodies were produced by layering the above-mentioned negative electrodes on both sides of the above-mentioned positive electrode via separators constituted by a microporous film made of PE having a thickness of 16 µm. Thereafter, a non-aqueous electrolytic solution battery with a rated capacity of 30 mAh was produced in the same manner as in Example 9.

### Example 12

A non-aqueous electrolytic solution was prepared in the same manner as in Example 9, except that the content of adiponitrile was changed to 0.9 mass%, and a non-aqueous electrolytic solution battery was produced in the same manner as in Example 9, except that the thus obtained non-aqueous electrolytic solution was used.

### Example 13

A non-aqueous electrolytic solution was prepared in the same manner as in Example 9, except that γ-butyrolactone was added in an amount to give a concentration of 0.5 mass%, and a non-aqueous electrolytic solution battery was produced in the same manner as in Example 9, except that the thus obtained non-aqueous electrolytic solution was used.

### Comparative Example 3

A non-aqueous electrolytic solution was prepared in the same manner as in Example 9, except that ethylene carbonate was used instead of PC, and a non-aqueous electrolytic solution battery was produced in the same manner as in Example 9, except that the thus obtained non-aqueous electrolytic solution was used.

### Comparative Example 4

A non-aqueous electrolytic solution was prepared in the same manner as in Example 9, except that adiponitrile was not added, and a non-aqueous electrolytic solution battery was produced in the same manner as in Example 9, except that the thus obtained non-aqueous electrolytic solution was used.

### Comparative Example 5

A non-aqueous electrolytic solution was prepared in the same manner as in Example 9, except that LiPF₆ was used instead of LiBF₄, and a non-aqueous electrolytic solution battery was produced in the same manner as in Example 9, except that the thus obtained non-aqueous electrolytic solution was used.

The batteries of Examples 9 to 13 and Comparative Examples 3 to 5 were left to stand for 24 hours after being assembled and then were subjected to the following chemical conversion treatment and evaluated on the characteristics below. In the chemical conversion treatment, the batteries were charged with a constant current (6 mA) and a constant voltage (4.0 V). When the charging current decreased to 0.3 mA, charging was stopped. At this time, the batteries were fully charged. Furthermore, the batteries were aged at 60°C for 24 hours, cooled for 2 hours, and then charged with a constant current and a constant voltage in the same condition as mentioned above.

### Flatness of negative electrode

The batteries of Examples 9 to 13 and Comparative Examples 3 to 5 were disassembled in an atmosphere of argon gas. The negative electrodes were removed therefrom, and their deformation degrees were confirmed visually. It should be noted that, in all of the negative electrodes, a Li-Al alloy was formed on a portion of the Al foil included in the clad material that faced the positive electrode mixture layer, and Al in the peripheral portion that did not face the positive electrode mixture layer did not react with Li and was maintained as it was.

In all of the batteries of the examples and comparative examples, the content of Li was 31 atom% when the total content of Li and Al in the Al active layer of the negative electrode was given as 100 atom%.

The negative electrodes of the batteries of Examples 9, 10, 12, and 13 in which the Al layers were formed on both sides of the substrate layer and the Li layers were formed on the surfaces of these Al layers had a higher flatness than the negative electrode of the battery of Example 11 in which the Al layer was formed on one side of the substrate layer and the Li layer was formed on the surface of this Al layer.

### Storage characteristics

The batteries of Examples 9 to 13 and Comparative Examples 3 to 5 were charged with a constant current (6 mA) and a constant voltage (4.0 V). When the charging current decreased to 0.3 mA, charging was stopped. Next, the batteries were discharged with a constant current of 6 mA (discharge cut-off voltage: 2V), and the discharge capacities (initial discharge capacity) were measured. Furthermore, the batteries were charged in the above-mentioned charging conditions until they were fully charged.

Each of the fully charged batteries was hung using a thin silk thread. The battery was immersed in pure water into a state in which the battery sank entirely below the water surface, and the weight of the battery in water was measured.

The fully charged batteries were stored at 85°C for 10 days. Then, the batteries were cooled to room temperature, the weights of the batteries in water were measured, followed by the determination of the difference from the weights of the batteries in water measured before storage. The volume of water displaced by the battery immersed in water increases by an amount corresponding to the amount by which the battery swelled after storage compared to before storage, and the weight of the battery decreases by an amount corresponding to the weight of the displaced water. In this manner, the difference between the volume of the battery before storage and the volume of the battery after storage was calculated based on the difference between the weight of the battery before storage and the weight of the battery after storage, and this difference in the volume was given as the amount of gas generated.

After the measurement of the amount of gas, the batteries were discharged with a constant current of 6 mA (discharge cut-off voltage: 2V). Thereafter, the batteries were charged in the above-mentioned charging condition and discharged with 6 mA (discharge cut-off voltage: 2V), and the discharge capacities (recovery capacities) after storage at a high temperature were measured. The high-temperature storage characteristics of the battery were evaluated based on the ratio of the recovery capacity (capacity recovery rate) to the initial discharge capacity.

After the measurement of the recovery capacity, the batteries were charged in the above-mentioned charging condition and discharged with 30 mA in an environment at -20°C (discharge cut-off voltage: 2V), and the discharge capacities in a low-temperature environment after storage at a high temperature were measured.

Table 3 shows the evaluation results of the storage characteristics of the batteries.

**Table 3**

| | Initial discharge capacity (mAh) | Capacity recovery rate after storage at high temperature (%) | Discharge capacity in low-temperature environment after storage at high temperature (mAh) | Gas generation amount after storage at high temperature (cm³) |
|---|---|---|---|---|
| Ex. 9 | 33 | 100 | 18.4 | 0.28 |
| Ex. 10 | 32 | 97 | 17.8 | 0.30 |
| Ex. 11 | 32 | 81 | 15.2 | 0.34 |
| Ex. 12 | 31 | 99 | 19 | 0.55 |
| Ex. 13 | 33 | 99 | 22.2 | 0.39 |
| Comp. Ex. 3 | 31 | 89 | 3.2 | 0.36 |
| Comp. Ex. 4 | 31 | 96 | 14.2 | 1.77 |
| Comp. Ex. 5 | 36 | 47 | 0.4 | 0.57 |

As shown in Table 3, regarding the batteries of Examples 9 to 13 that were each provided with the negative electrode including the laminate containing the substrate layer and the Al layer joined to at least one side of the substrate layer, the Li-Al alloy being formed on at least the surface side of the Al layer, and that used the non-aqueous electrolytic solution containing LiBF₄,PC and a nitrile compound (adiponitrile), the capacity recovery rate was high and the generation of gas was suppressed after storage at high temperatures, and discharge could be favorably performed in a low-temperature environment after storage at a high temperature. That is to say, these batteries had excellent storage characteristics. Regarding the battery of Example 12 in which the content of adiponitrile in the non-aqueous electrolytic solution was increased and the battery of Example 13 in which γ-butyrolactone was added to the non-aqueous electrolytic solution, the discharge characteristics in a low-temperature environment after storage at a high temperature were particularly excellent.

In contrast, regarding the battery of Comparative Example 3 in which non-aqueous electrolytic solution containing ethylene carbonate instead of PC was used, and the battery of Comparative Example 5 in which non-aqueous electrolytic solution containing LiPF₆ instead of LiBF₄, the discharge characteristics in a low-temperature environment after storage at a high temperature were poor. Regarding the battery of Comparative Example 5, the capacity recovery rate after storage at a high temperature was low, and the amount of gas generated after storage at a high temperature was large. Furthermore, regarding the battery of Comparative Example 4 in which the non-aqueous electrolytic solution containing no adiponitrile was used, the amount of gas generated after storage at a high temperature was large.

The present invention may be embodied in other forms without departing from the spirit or essential characteristics thereof. The embodiments disclosed in this application are to be considered in all respects as illustrative and not limiting. The scope of the present invention is indicated by the appended claims rather than by the foregoing description, and all changes which come within the meaning and range of equivalency of the claims are intended to be embraced therein.

### Industrial Applicability

The first aspect and the second aspect of the non-aqueous electrolyte battery of the present invention can exhibit excellent load characteristics even at low temperatures after storage at a high temperature, and can be thus favorably used in an application such as a power source for a vehicle emergency call system that is required to be capable of being favorably discharged even at a low temperature after being exposed to a high-temperature environment, taking advantage of such characteristics. Moreover, with the first aspect of the non-aqueous electrolyte battery of the present invention, the irreversible capacity of the negative electrode decreases, and therefore, the initial charging and discharging efficiency of a secondary battery can be improved.

The second aspect of the non-aqueous electrolyte battery of the present invention can be repeatedly charged and has favorable storage characteristics, and can be thus favorably used in an application such as a power source for a vehicle emergency call system that is required to be capable of favorably maintaining the capacity in a high-temperature environment for a long period of time, or required to be capable of being favorably discharged in a low-temperature environment after storage in a high-temperature environment, taking advantage of such characteristics.

### Description of Reference Numerals

- 1: Non-aqueous electrolyte battery (secondary battery)
- 2: Laminate film sheathing body
- 5: Positive electrode
- 6: Negative electrode
- 7: Separator
- 100: Negative electrode precursor
- 101: Laminated metal foil
- 101a: Metal substrate layer
- 101b: Al metal layer
- 102: Li foil

## Claims

1. A non-aqueous electrolyte battery comprising:
a negative electrode;
a positive electrode; and
non-aqueous electrolyte,
wherein the negative electrode contains at least one negative electrode active material selected from the group consisting of Li, a Li alloy, an element capable of forming an alloy with Li, and a compound containing the element, and
the non-aqueous electrolyte contains, in an amount within a range of 8 mass% or less, a phosphoric acid compound having, in its molecule, a group represented by General Formula (1): 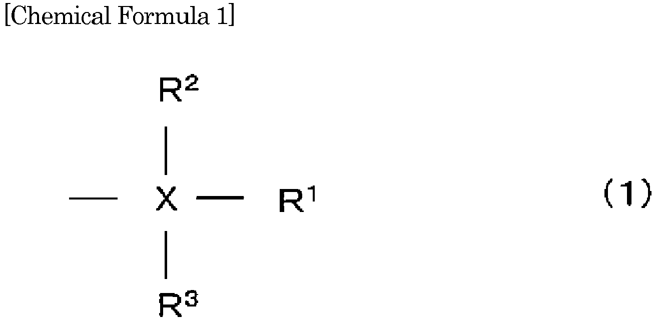 where X is Si, Ge or Sn; R¹, R² and R³ independently represent an alkyl group having 1 to 10 carbon atoms, an alkenyl group having 2 to 10 carbon atoms, or an aryl group having 6 to 10 carbon atoms; and some or all of hydrogen atoms are optionally substituted by a fluorine atom.

2. The non-aqueous electrolyte battery according to claim 1, wherein the negative electrode contains a Li-Al alloy as a negative electrode active material.

3. The non-aqueous electrolyte battery according to claim 1 or 2, wherein the non-aqueous electrolyte contains a phosphoric acid compound having a trimethylsilyl group in its molecule.

4. The non-aqueous electrolyte battery according to any one of claims 1 to 3,
wherein the non-aqueous electrolyte contains propylene carbonate in an amount of 10 vol% or more in the total of solvents.

5. The non-aqueous electrolyte battery according to any one of claims 1 to 4,
wherein the non-aqueous electrolyte further contains a nitrile compound.

6. The non-aqueous electrolyte battery according to any one of claims 1 to 5,
wherein the non-aqueous electrolyte further contains a compound having a lactone ring.

7. A non-aqueous electrolyte battery manufacturing method for manufacturing the non-aqueous electrolyte battery according to any one of claims 1 to 6,
wherein a non-aqueous electrolyte containing, in an amount within a range of 8 mass% or less, a phosphoric acid compound having a group represented by General Formula (1) above in its molecule is used.

8. The non-aqueous electrolyte battery manufacturing method according to claim 7, wherein the non-aqueous electrolyte contains the phosphoric acid compound having a group represented by General Formula (1) above in its molecule in an amount of 0.1 mass% or more.
